# EUROPEAN PATENT SPECIFICATION

(11) **EP 4 521 996 B1**
(45) Date of publication and mention of the grant of the patent: **09.12.2026**
(21) Application number: 23736816.2
(22) Date of filing: 12.05.2023
(51) Int. Cl.: A47B 96/20, A47B 96/02, F21V 7/09, F21V 33/00

(54) **COMPONENT FOR SHELF UNITS, SHELVES, BOOKCASES, STAIRS AND SIMILAR FURNISHING ELEMENTS AND ITS MANUFACTURING PROCESS**
REGALELEMENT, REGAL, BÜCHERREGAL, TREPPEN UND DERGLEICHEN EINRICHTUNGSELEMENTE UND VERFAHREN ZU SEINER HERSTELLUNG
COMPOSANT D'UNITÉS DE RAYONNAGE, D'ÉTAGÈRES, DE BIBLIOTHÈQUES, D'ESCALIERS ET D'ÉLÉMENTS D'AMEUBLEMENT SIMILAIRES ET SON PROCÉDÉ DE FABRICATION

(30) Priority: 12.05.2022 IT 202200009845
(43) Date of publication of application: 19.03.2025
(73) Proprietor: Luce5 S.r.l., 52025 Montevarchi (AR) (IT)
(72) Inventor: CETOLONI, Stefano, 52025 Montevarchi (AR) (IT)
(74) Representative: Fabbriciani, Simone
(86) International application number: PCT/IB2023/054923
(87) International publication number: WO 2023/218416

(56) References cited:
- WO-A1-2022/013389
- IT-A1- PN20 100 055
- JP-A- 2020 095 923
- US-B1- 9 538 859

## Description

### Technical field

This invention relates to a furnishing component for shelving, shelves, bookcases, stairs and similar furnishing elements and its production process.

### Background art

The need is increasingly felt, by designers and architects, to offer original shapes and new functionalities of the furnishing, both to make the environment more comfortable for those who work or live there, and to make it exclusive.

It is now customary to make, or seek to construct, a type of furnishing which can be both an expression of technology, but also of formal rigour: two requirements which are difficult to bring together in a single system. Moreover, users are increasingly demanding original and personalised furniture, that is to say, "tailored" furniture.

Together with these aesthetic requirements, there is also the need to reduce the overall dimensions by creating cleaner lines, providing furnishings of reduced thicknesses.

Lastly, in order to reduce the costs it is now essential to render the product systematic, defining functional construction parameters which, in the practical execution of shelves of this type, start from basic extruded elements, which can be adapted and assembled to the required measurements.

Examples of prior art can be found in WO 2022/013389 A1 and IT PN20100055 A1.

### Aims and summary of the invention

The aim of the invention is to provide a component for shelving, shelves, bookcases, stairs and similar furnishing elements which allows the problems linked to the prior art to be overcome and to satisfy the above-mentioned requirements.

In the context of the above-mentioned purpose, an aim of the invention is to provide a component for shelving, shelves, bookcases, stairs and similar furnishing elements which combines an advanced technology with strict aesthetic standards.

Another aim of the invention is to allow the creation of shelving, shelves, bookcases, stairs and other furnishing elements which are very customisable.

Another aim of the shelves according to the invention is to have extremely thin thicknesses, but aesthetically refined shapes.

Yet another aim of the invention is to provide a component for shelving, shelves, bookcases, stairs and similar furnishing elements with means which are easily available on the market and using materials of common use, in such a way that the device is economically competitive.

### Brief description of the invention

This purpose, as well as these and other aims, which are described in more detail below, are achieved by component for shelving, shelves, bookcases, stairs and similar furnishing elements according to the invention comprising the technical features described in one or more of the appended claims. The dependent claims correspond to possible different embodiments of the invention.

More specifically, according to a first aspect, the invention relates to a component for shelving, shelves, bookcases, stairs and similar furnishing elements, with a so-called "sandwich" structure wherein an intermediate layer is interposed between two layers substantially consisting of two laminar elements.

The intermediate layer has a frame composed of interconnected metal crosspieces, for example a pair of vertical and horizontal aluminium rods, mutually normal, preferably removable, by snap fitting means, preferably of the male-female type.

The frame is for supporting one or more elongate elements, also made of metal material, also preferably aluminium, for housing induction lighting means, for example LEDs, of per se known type, and positioned inside the perimeter defined by the frame.

The metal crosspieces have advantageously ducts for the passage of cables for electrifying the lighting means which, as well as allowing the completion of the lighting system in the component, provides the possibility of integrating inside panels, shelving, shelves, bookcases, stairs and the like, also additional functions, such as induction power supply systems, signal connection devices, etc.

Advantageously, the electrification cables have pressurise-fitted electrical contacts which allow the passage of current and the switching on of light without having to perform wiring. In this way, the lighting means are designed to be activated by the contact with a suitable switch positioned on an outer wall substantially normal relative to the plane of extension of the component.

This feature allows anyone to easily and insert and remove, without risk, the shelves from the sides of the furniture.

In practice, the product made in this way allows multiple developments in the integration of lighting and/or electronics components and allows compartments to be made for housing these components, making them basically "invisible".

Advantageously, there is a reinforcement plate positioned inside the perimeter defined by the frame. The plate has a structure consisting of a tessellation of the space of the honeycomb type, preferably honeycomb-shaped, and is adjacent to the elongate element. This type of plate, which is only known in the aerospace sector, even though it is extremely light, gives excellent mechanical characteristics to the structure.

In particular,the honeycomb structure made of aluminium guarantees a mechanical strength such as to be able to reach greater lengths with smaller thicknesses and without the aid of intermediate supports.

According to the invention, the elongate element extends along a longitudinal direction within the plane of extension of the component. Further, the elongate element comprises an inner groove for housing the lighting means. The inner groove extends along the above-mentioned longitudinal direction and has a substantially elliptical curvilinear profile, shaped in such a way that the light source of the lighting means is hidden from direct contact with the eye of the user.

In use, the light which escapes from the inner groove, formed entirely by a cutter, thanks precisely to the particular geometrical shape of the groove, means that the light source is hidden, preventing glare to the human eye. Advantageously, the curved profile is made by placing in succession at least three circular arcs of different radius and in increasing sequence (a circumference of smaller radius, one of intermediate radius and a third of larger radius), so as to allow the head of the machining cutter to enter into the thickness to be removed in the most suitable manner.

Preferably, the larger of the three radiuses is greater than the intermediate radius by a percentage range of between 33 and 43%. inclusive, preferably between 35 and 41%, inclusive, more preferably between 37 and 39% inclusive, even more preferably substantially equal to 38%.

Similarly, the intermediate radius is in turn preferably larger than the smaller radius by a percentage range of between 60 and 72%, inclusive, preferably between 63 and 69%, inclusive, more preferably between 65 and 67% inclusive, even more preferably substantially equal to 66%.

Advantageously, so that the milling on the elongate element prepares the best inner groove, the ratio between the larger and smaller radiuses and the ratio between the length of the access opening to the inner groove and the width of the inner groove are mutually in a proportion of between 1.30 and 2.00, inclusive, preferably between 1.40 and 1.90, inclusive, more preferably between 1.50 and 1.80, inclusive, even more preferably between 1.60 and 1.70, inclusive.

Another aspect relates to the process for making the component for shelving, shelves, bookcases, stairs and similar furnishing elements.

The process comprises the following steps:
- extruding the metal crosspieces provided with snap fitting means for their reciprocal connection and the elongate element (or the elongate elements provided);
- milling each elongate element along the longitudinal direction, which is of extension of the elongate element, in such a way as to form the inner groove for housing the induction lighting means and so that the inner groove has a substantially elliptical curvilinear profile shaped in such a way as to hide the light source of the lighting means from direct contact with the eye of the user;
- making ducts for the passage of the electrification cables on the metal crosspieces, in such a way as to allow the mutual communication between each of the inner grooves with the corresponding ducts;
- connecting the metal crosspieces using the snap fitting means so as to form a frame;
- positioning the elongate element and the reinforcement plate, one adjacent to the other, inside the perimeter defined by the frame;
   the elongate element houses the lighting means in its inner groove and the reinforcement plate is of the type with the honeycomb structure described above: this positioning is performed in such a way as to form an intermediate layer lying in the plane of extension of the component;
- passing the cables for electrifying the lighting means along the ducts in such a way as to be able to connect them to the lighting means;
- making, by removing material, a window on a first of the two laminar elements, in such a way that the window is defined at the inner groove so that the light emitted by the lighting means is not stopped by the thickness of the first element; and
- gluing the laminar elements, both the first and the second, to opposite faces of the intermediate layer, in such a way as to make the component.

Preferably, during the making of the window on the first element, the holes necessary for the passage of the electrical cables are made, again by removal of material.

Advantageously, the milling of each elongate element comprises the forming of inner grooves having a curved profile which is made by placing in succession at least three circular arcs of different radius and in increasing sequence with respect to each other (a circumference of smaller radius, one of intermediate radius and a third of larger radius), so as to allow the head of the machining cutter to enter into the thickness to be removed in the most suitable manner.

Preferably, the larger of the three radiuses is greater than the intermediate radius by a percentage range of between 33 and 43%. inclusive, preferably between 35 and 41%, inclusive, more preferably between 37 and 39% inclusive, even more preferably substantially equal to 38%.

Similarly, the intermediate radius is in turn preferably larger than the smaller radius by a percentage range of between 60 and 72%, inclusive, preferably between 63 and 69%, inclusive, more preferably between 65 and 67% inclusive, even more preferably substantially equal to 66%.

Advantageously, so that the milling on the elongate element prepares the best inner groove, the ratio between the larger and smaller radiuses and the ratio between the length of the access opening to the inner groove and the width of the inner groove are mutually in a proportion of between 1.30 and 2.00, inclusive, preferably between 1.40 and 1.90, inclusive, more preferably between 1.50 and 1.80, inclusive, even more preferably between 1.60 and 1.70, inclusive.

### Brief description of the drawings

Further features and advantages of the invention are more apparent from the description of a preferred, non-limiting embodiment of the component for shelving, shelves, bookcases, stairs and similar furnishing elements, illustrated by way of example and without limiting the scope of the invention, with the aid of the accompanying drawings, in which:

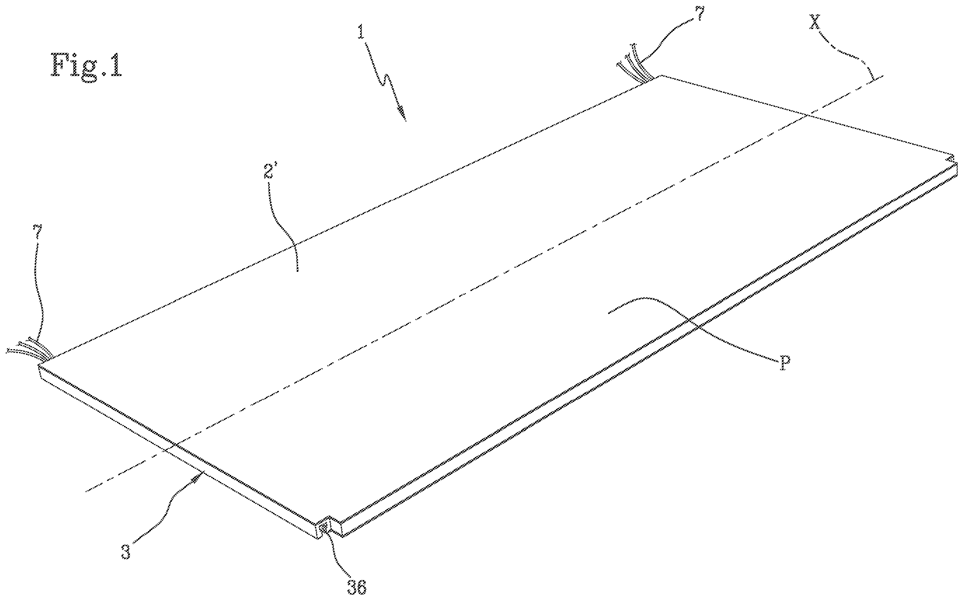

Figure 1 is a perspective view from above of a component 1;
Figure 2 is a perspective view from below of the component 1;

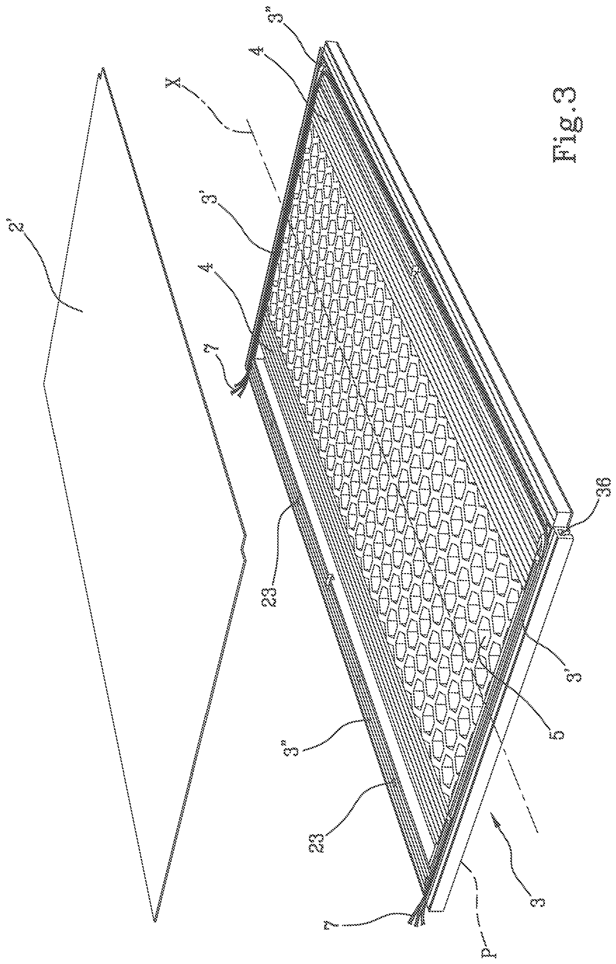

Figure 3 is a perspective view of the component 1 with a first laminar element 2' separated from the intermediate layer 3;
Figure 4 is an exploded view of the component 1 with an enlargement for the snap fitting means (32 and 33);
Figure 5 is a cross-section of the component 1 in a plane substantially parallel to the plane P;
Figure 6 is a cross section through line VI-VI;
Figure 7 is a cross section through line VII-VII;
Figure 7a shows an enlargement of the cross-section 7.

### Detailed description of the actuation of invention

The above-mentioned drawings show a preferred embodiment of a component for shelving, shelves, bookcases, stairs and similar furnishing elements, according to the invention, which is denoted in its entirety by the numeral 1 and which comprises a first 2' and a second laminar element 2", substantially parallel with each other, which define, with the intermediate layer 3 interposed between them (and which they cover), the plane P of extension of the component 1. The intermediate layer 3 has a frame consisting of metal crosspieces 3' and 3" removably connected to each other by snap fitting means. The crosspieces 3' and 3", made of aluminium, comprise a pair of vertical rods 3' and a pair of horizontal rods 3" substantially normal to each other. The frame defines a perimeter, inside of which are positioned two elongate elements 4, also made of aluminium, for housing LED strips 6 inside inner grooves 41 which extend along the longitudinal direction X in the elements 4.

The crosspieces 3' and 3" in the same way as the elongate elements 4 have grooves or knurls, of per se known type, to facilitate the gluing of the laminar elements 2' and 2".

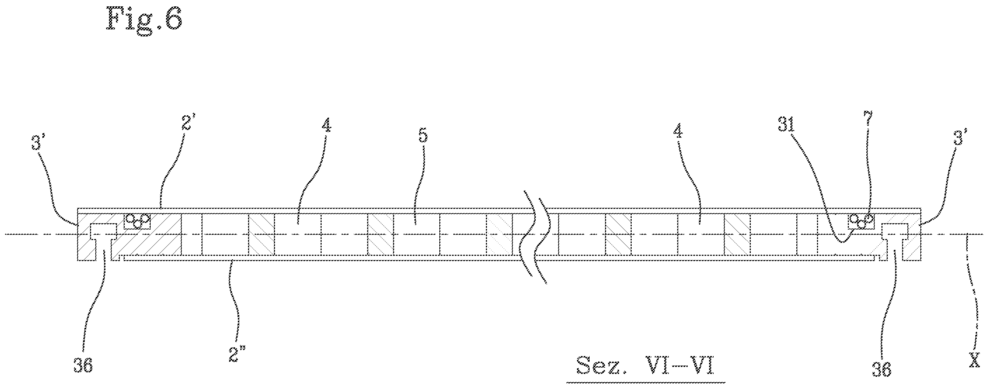

The vertical rods 3' have slots 36 (Fig. 6) designed to engage with suitable guides (not illustrated) formed on external panels for the sliding of the component 1.

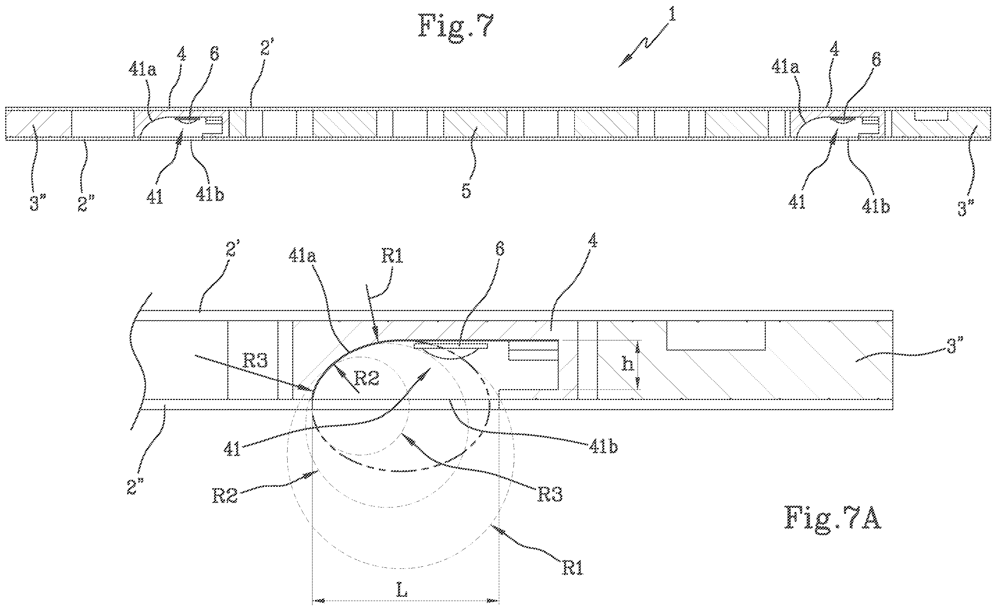

With reference to Figures 7 and 7a, the grooves 41 have a curvilinear, substantially elliptical profile 41a, shaped in such a way that the light source of the LEDs 6 is hidden from direct contact with the eye of the user. The curvilinear profile 41a is formed by placing in succession three circular arcs C1, C2 and C3 of different radiuses R1 (larger radius), R2 (intermediate radius) and R3 (smaller radius), wherein R1 > R2 > R3.

Preferably, R1 is approximately 38% larger than R2.

Similarly, R2 is, in turn, greater than R3 by about 66%.

In practice:
R1 = 11.5 mm;
R2 = 8.3 mm;
R3 = 5 mm.

The ratio between the radiuses R3 and R1 and the ratio between the length L of the access opening 41b to the inner groove 41 and the width h of the inner groove 41 are in a reciprocal proportion of between 1.60 and 1.70, inclusive.

More specifically, this ratio is approximately 1.65.

In effect, if - as stated - R is the ratio between the radiuses R3 and R1 and K is the ratio between the width (or height) h and the length L of the groove 41, then in the case in question: $R = R 3 / R 1 = 5 mm / 11.5 mm = 0.435$ $K = h / L = 5 mm / 19 mm = 0.263$ $R / K = 1.654 .$

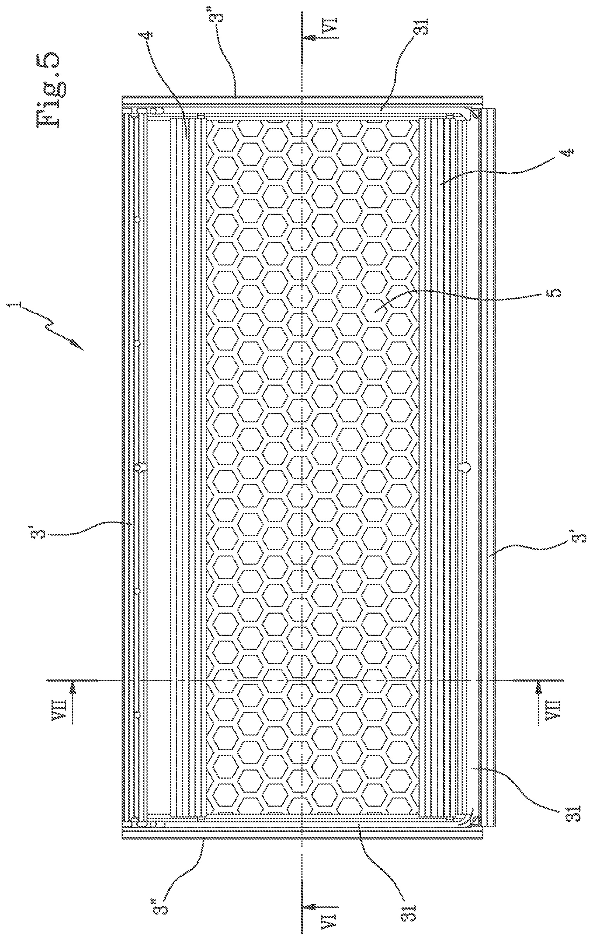

The LEDs 6 are electrified by electrical cables 7 which pass through ducts 31 formed on the vertical rods 3' and connect with the LEDs 6 by means of openings 34' for communication with the corresponding inner groove 41 (Fig. 5).

According to a variant embodiment, the ducts 31 may also be made on the horizontal rods 3", obviously provided with openings 34".

The cables 7 are electrified by means of pressure-fitted electrical contacts, in such a way that the LEDs 6 can be activated by contact with a suitable switch positioned on an outer wall substantially normal relative to the plane P of extension of the component 1.

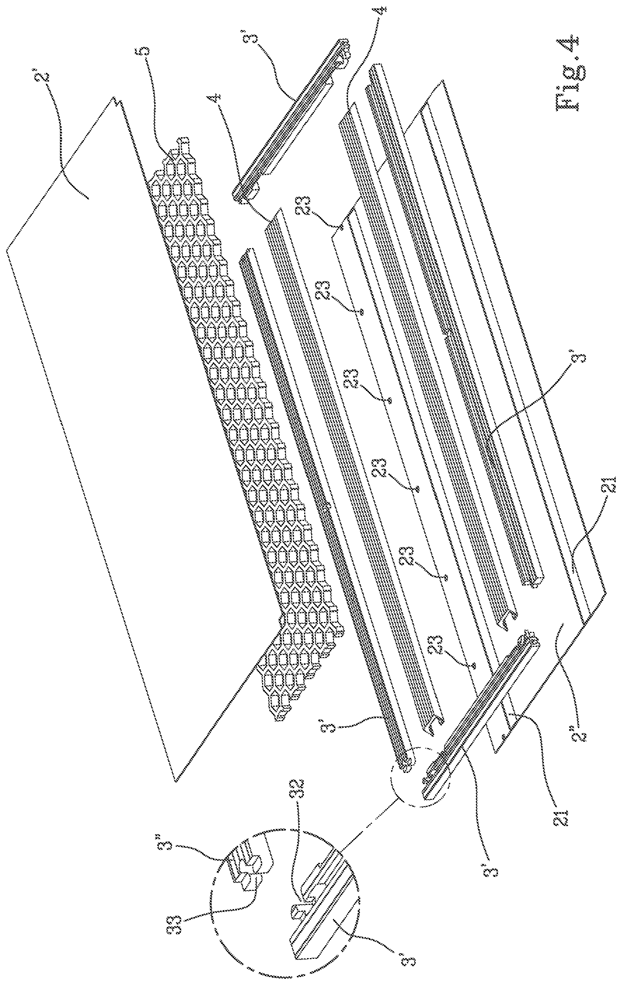

Between the two elongate elements 4, inside the perimeter defined by the frame composed of the crosspieces 3' and 3" there is a reinforcement plate 5, adjacent to the elements 4. The plate 5 has a structure consisting of a tessellation of the space of the honeycomb type, honeycomb-shaped. According to the embodiment described here, the snap fitting means comprise two male elements 32 protruding from each of the vertical rods 3' for engaging with the respective female element 33 defined at the respective horizontal rod 3". Each horizontal rod 3" will also have two female elements 33 (Figure 4).

According to a variant embodiment comprising only one elongate element, the vertical rods 3' will obviously each be equipped with a single male element 32.

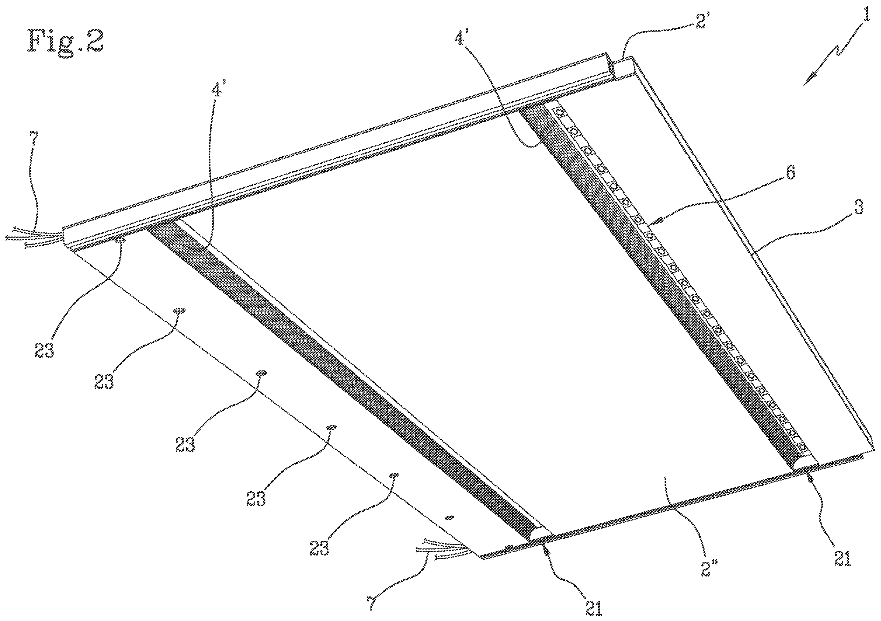

Lastly, the second laminar element 2", which is glued on the intermediate layer has the appropriate windows 21 formed at the grooves 41, so that the light emitted by the LEDs 6 is not stopped by the thickness of the second element 2". Moreover, the element 2" also comprises the holes 23 necessary for the passage of other electrical cables 7 (Figure 2).

From the above description it may be seen how the invention achieves the preset purpose and aims and in particular the fact that a component is made for shelving, shelves, bookcases, stairs and similar furnishing elements, for example a shelf, a crosspiece, an upright or a sash which is light and robust.

More specifically, the aluminium structure makes it possible to reach an ultra-thin thickness inside of which it is possible to house a luminous groove without the structure yielding in terms of mechanical strength.

An advantage of the invention is that this component is a module structured in such a way as to be able to satisfy, with its mechanical characteristics of strength and lightness, the requirements of an entire range of objects designed for the construction of furnishings in general: unlike standard furnishing components made of wood which, in order to guarantee comparable strength, require greater thicknesses and, consequently, are very heavy, proportional to the length of the shelf body. Another advantage of the invention is due to the fact that, even in the case of a "long" components, intermediate supports are not necessary to guarantee the support of the "sag" of the weight of the component at the centre of the body: such elements are absolutely necessary on wooden furniture if they certainly exceed a metre and a half in length.

Another advantage of this technical feature is that the lightweight and resistant structure allows certain limits to be overcome in the requirements and the mechanical processing applied previously, such as, for example, the limit in the deep holes for the passage of cables.

Another advantage of this component is that the use of the raw material, that is to say, aluminium, is rationalised, with a consequent and significant reduction in weight (from 30% to 70% less), but also a considerable saving in economic terms considering the increasingly high cost of raw materials. Another advantage of the invention is that inside an extremely thin thickness, of just 10 mm compared with 19 mm of wooden structures, there is a complete and integrated lighting system.

Another advantage of the invention is that, thanks to this solidity, together with the lightness of the structure, the production of cabinets, kitchens, display units, bookcases, display cabinets and modular structures of various types is guaranteed. Moreover, inside each single component it is possible to house a frame for engaging hinges, guides or other mechanisms designed for the rotation and/or translation of the elements.

Lastly, the use of means which are easily available on the market and the use of common materials makes the device economically competitive.

The invention can be modified and adapted in several ways without thereby departing from the scope of the inventive concept.

Moreover, all the details of the invention may be substituted by other technically equivalent elements.

In practice, the materials used, as well as the dimensions, may be of any type, depending on requirements, provided that they are consistent with their production purposes.

## Claims

1. A component (1) for shelving, shelves, bookcases, stairs and similar furnishing elements comprising:
at least two laminar elements (2', 2") substantially parallel to each other and defining a plane (P) of extension of the component (1);
said at least two laminar elements (2', 2") covering an intermediate layer (3), interposed between them, substantially coplanar to said plane (P);
said intermediate layer (3) having a frame consisting of metal crosspieces (3', 3") designed to be connected to each other by snap fitting means (32, 33), for supporting at least one elongate element (4), made of metal material, extending along a longitudinal direction (X) whitin said plane (P);
said elongate element (4) comprising and being configured for housing induction-operated lighting means (6) and positioned inside the perimeter defined by said frame;
said metal crosspieces (3', 3") having ducts (31) for the passage of cables (7) for electrifying said lighting means (6).

2. The component (1) according to claim 1, comprising a reinforcement plate (5) positioned inside the perimeter defined by said frame, adjacent to said at least one elongate element (4) and having a structure consisting of a tessellation of the space of a honeycomb type, preferably shaped like a honeycomb.

3. The component (1) according to claim 1 or 2, wherein said at least one elongate element (4) comprises an inner groove (41) for said lighting means (6);
said inner groove (41) having a curvilinear substantially elliptical profile (41a) shaped in such a way that the light source of the lighting means (6) is hidden from direct contact with the eye of the user.

4. The component (1) according to claim 3, wherein said curvilinear profile (41a) consists of the succession of at least three circular arcs (C1, C2, C3) of different radius (R1, R2, R3), in such a way that the ratio between the radiuses (R1, R3) of the smaller (C1) and larger (C3) circumference and the ratio between the width (h) of said inner groove (41) and the length (L) of the access opening (41b) of said inner groove (41), are mutually in a proportion of between 1.30 and 2.00, inclusive, preferably between 1.40 and 1.90, inclusive, more preferably between 1.50 and 1.80, inclusive, even more preferably between 1.60 and 1.70, inclusive.

5. The component (1) according to any one of the claims 1-4, wherein said metal crosspieces (3', 3"), constituting the frame, comprise at least a pair of vertical rods (3') and a pair of horizontal rods (3") which are mutually normal.

6. The component (1) according to claim 5, wherein the snap fitting means (32, 33) comprise at least one male element (32) protruding from at least one of said vertical rods (3') and designed to be engaged with a female element (33) defined at the respective one of said horizontal rods (3").

7. The component (1) according to any one of claims 3 to 6, wherein said ducts (31) are defined along the direction of extension of said metal crosspieces (3', 3") and have, at said at least one elongate element (4), an opening (34', 34") for communication with said inner groove (41).

8. A process for making a component (1) for shelving, shelves, bookcases, stairs and similar furnishing elements comprising the steps which consist of:
- extruding metal crosspieces (3', 3") having snap fitting means (32, 33) for their reciprocal connection and at least one elongate element (4) made of metal material;
- milling said at least one elongate element (4) along a longitudinal direction (X) of extension of said at least one elongate element (4), in such a way as to form an inner groove (41) designed to house induction lighting means (6) and so that said inner groove (41) has a substantially elliptical curvilinear profile (41a) shaped in such a way as to hide the light source of said lighting means (6) from direct contact with the eye of the user;
- making ducts (31) for the passage of cables (7) for electrifying said lighting means (6) on said metal crosspieces (3', 3"), in such a way as to allow the mutual communication between each of said inner grooves (41) with the corresponding said conduits (41);
- connecting said metal crosspieces (3', 3") using said snap fitting means (31, 32) to form a frame defining a perimeter;
- positioning, inside said perimeter, at least one elongate element (4) and a reinforcement plate (5), one adjacent to the other in such a way as to form an intermediate layer (3) defining a plane (P) of extension of the component (1);
said at least one elongate element (4) housing said lighting means (6) in said inner groove (41) and said reinforcing plate (5) having a structure consisting of a tessellation of the space of the honeycomb type, preferably honeycomb-shaped;
said intermediate layer (3) interposing at least two laminar elements (2', 2") substantially parallel to each other;
- passing said cables (7) in said ducts (31) in such a way as to be able to connect them to said lighting means (6);
- making, by removing material, a window (21) on a first element (2') of said at least two laminar elements (2', 2");
said window (21) being defined at said inner groove (41), in such a way that the light emitted by said lighting means (6) is not stopped by the thickness of said first element (2'); and
- gluing said laminar elements (2', 2") to opposite faces of said intermediate layer (3) in such a way as to make the component (1).

9. The process according to claim 8, wherein the step of milling said at least one elongate element (4) comprises making said inner groove (41) in such a way that it has a curved profile (41a) made by placing in succession at least three circular arcs (C1, C2, C3) of different radiuses (R1, R2, R3), a larger radius (R1), an intermediate radius (R2) and a smaller radius (R3), and in increasing sequence with each other along the milling line.

10. The process according to claim 9, wherein said larger radius (R1) is greater than said intermediate radius (R2) by a percentage range of between 33% and 43%, inclusive, preferably between 35 and 41%, inclusive, more preferably between 37 and 39% inclusive, even more preferably substantially equal to 38% and said intermediate radius (R2) is, in turn, greater than said smaller radius (R1) by a percentage range of between 60 and 72%, inclusive, preferably between 63 and 69%, inclusive, more preferably between 65 and 67% inclusive, even more preferably substantially equal to 66%.

## Patentansprüche

1. Komponente (1) für Regalsysteme, Regale, Bücherschränke, Treppen und ähnliche Einrichtungselemente, umfassend:
mindestens zwei Laminarelemente (2', 2"), die im Wesentlichen parallel zueinander sind und eine Erstreckungsebene (P) der Komponente (1) definieren,
wobei die mindestens zwei Laminarelemente (2', 2") eine Zwischenschicht (3) bedecken, die im Wesentlichen koplanar zu der Ebene (P) zwischen ihnen eingefügt ist, wobei die Zwischenschicht (3) einen Rahmen umfasst, der aus Metallkreuzstücken (3', 3") besteht, die ausgestaltet sind, um durch Schnappbefestigungsmittel (32, 33) zum Stützen mindestens eines aus Metallmaterial bestehenden langgestreckten Elements (4), das sich entlang einer Längsrichtung (X) innerhalb der Ebene (P) erstreckt, miteinander verbunden zu werden,
wobei das langgestreckte Element (4) durch Induktion betätigte Leuchtmittel (6) umfasst und zu deren Aufnahme ausgestaltet und im Inneren des durch den Rahmen definierten Umfangs positioniert ist,
wobei die Metallkreuzstücke (3', 3") Kanäle (31) zur Führung von Kabeln (7) zur Elektrifizierung der Leuchtmittel (6) aufweisen.

2. Komponente (1) nach Anspruch 1, umfassend eine Verstärkungsplatte (5), die im Inneren des durch den Rahmen definierten Umfangs benachbart zu dem mindestens einen langgestreckten Element (4) positioniert ist und eine Struktur aufweist, die aus einer wabenartigen Raumunterteilung, die vorzugsweise wabenförmig ausgeformt ist, besteht.

3. Komponente (1) nach Anspruch 1 oder 2, wobei das mindestens eine langgestreckte Element (4) eine innere Rille (41) für die Leuchtmittel (6) umfasst,
wobei die innere Rille (41) ein krummliniges, im Wesentlichen elliptisches Profil (41a) aufweist, das derart ausgeformt ist, dass die Lichtquelle der Leuchtmittel (6) vor direktem Kontakt mit dem Auge des Nutzers verborgen ist.

4. Komponente (1) nach Anspruch 3, wobei das krummlinige Profil (41a) aus einer Abfolge von mindestens drei Kreisbögen (C1, C2, C3) unterschiedlicher Radien (R1, R2, R3) besteht, derart, dass das Verhältnis zwischen den Radien (R1, R3) des kleineren (C1) und größeren (C3) Umfangs und das Verhältnis zwischen der Breite (h) der inneren Rille (41) und der Länge (L) der Zugangsöffnung (41b) der inneren Rille (41) gegenseitig in einem Verhältnis zwischen 1,30 und 2,00 einschließlich, vorzugsweise zwischen 1,40 und 1,90 einschließlich, besonders bevorzugt zwischen 1,50 und 1,80 einschließlich und ganz besonders bevorzugt zwischen 1,60 und 1,70 einschließlich stehen.

5. Komponente (1) nach einem der Ansprüche 1-4, wobei die Metallkreuzstücke (3', 3"), die den Rahmen darstellen, mindestens ein Paar vertikaler Stäbe (3') und ein Paar horizontaler Stäbe (3") umfassen, die aufeinander senkrecht stehen.

6. Komponente (1) nach Anspruch 5, wobei die Schnappbefestigungsmittel (32, 33) mindestens ein Federelement (32) umfassen, das aus mindestens einem der vertikalen Stäbe (3') hervorsteht und ausgestaltet ist, um mit einem Nutelement (33) in Eingriff zu gelangen, das an dem jeweiligen einen der horizontalen Stäbe (3") definiert ist.

7. Komponente (1) nach einem der Ansprüche 3 bis 6, wobei die Kanäle (31) entlang der Erstreckungsrichtung der Metallkreuzstücke (3', 3") definiert sind und an dem mindestens einen langgestreckten Element (4) eine Öffnung (34', 34") für die Kommunikation mit der inneren Rille (41) aufweisen.

8. Verfahren zur Herstellung einer Komponente (1) für Regalsysteme, Regale, Bücherschränke, Treppen und ähnliche Einrichtungselemente, umfassend die folgenden Schritte:
- Extrudieren von Metallkreuzstücken (3', 3"), aufweisend Schnappbefestigungsmittel (32, 33) für deren gegenseitige Verbindung und mindestens einem aus Metallmaterial bestehendes langgestrecktes Element (4);
- Fräsen des mindestens einen langgestreckten Elements (4) entlang einer Längserstreckungsrichtung (X) des mindestens einen langgestreckten Elements (4), derart, dass eine innere Rille (41) gebildet wird, die ausgestaltet ist, um Induktionsleuchtmittel (6) aufzunehmen, und sodass die innere Rille (41) ein im Wesentlichen elliptisches krummliniges Profil (41a) aufweist, das derart ausgeformt ist, dass die Lichtquelle der Leuchtmittel (6) vor direktem Kontakt mit dem Auge des Nutzers verborgen wird;
- Herstellen von Kanälen (31) zur Führung von Kabeln (7) zur Elektrifizierung der Leuchtmittel (6) auf den Metallkreuzstücken (3', 3"), derart, dass die gegenseitige Kommunikation zwischen jeder der inneren Rillen (41) mit den entsprechenden Leitungen (41) ermöglicht wird;
- Verbinden der Metallkreuzstücke (3', 3") mithilfe der Schnappbefestigungsmittel (31, 32), um einen einen Umfang definierenden Rahmen zu bilden;
- Positionieren mindestens eines langgestreckten Elements (4) und einer Verstärkungsplatte (5) jeweils zueinander benachbart im Inneren des Umfangs, derart, dass eine Zwischenschicht (3) gebildet wird, die eine Erstreckungsebene (P) der Komponente (1) definiert, wobei das mindestens eine langgestreckte Element (4) die Leuchtmittel (6) in der inneren Rille (41) aufnimmt und die Verstärkungsplatte (5) eine Struktur aufweist, die aus einer wabenartigen Raumunterteilung, die vorzugsweise wabenförmig ausgeformt ist, besteht,
wobei die Zwischenschicht (3) zwischen mindestens zwei Laminarelementen (2', 2"), die im Wesentlichen parallel zueinander sind, eingefügt ist;
- Führen der Kabel (7) in den Kanälen (31) derart, dass sie mit den Leuchtmitteln (6) verbunden werden können;
- Herstellen eines Fensters (21) auf einem ersten Element (2') der mindestens zwei Laminarelemente (2', 2") durch Abtragen von Material,
wobei das Fenster (21) an der inneren Rille (41) derart definiert ist, dass das durch die Leuchtmittel (6) abgestrahlte Licht nicht durch die Dicke des ersten Elements (2') gestoppt wird, und
- Verleimen der Laminarelemente (2', 2") mit entgegengesetzten Flächen der Zwischenschicht (3) derart, dass die Komponente (1) hergestellt wird.

9. Verfahren nach Anspruch 8, wobei der Schritt des Fräsens des mindestens einen langgestreckten Elements (4) das Herstellen der inneren Rille (41) derart umfasst, dass sie ein gekrümmtes Profil (41a) aufweist, das durch Platzieren mindestens dreier Kreisbögen (C1, C2, C3) unterschiedlicher Radien (R1, R2, R3), eines größeren Radius (R1), eines Zwischenradius (R2) und eines kleineren Radius (R3), nacheinander und in zunehmender Reihenfolge miteinander entlang der Fräsbahn hergestellt wird.

10. Verfahren nach Anspruch 9, wobei der größere Radius (R1) um einen Anteilsbereich zwischen 33 % und 43 % einschließlich, vorzugsweise zwischen 35 und 41 % einschließlich, besonders bevorzugt zwischen 37 und 39 % einschließlich, ganz besonders bevorzugt im Wesentlichen gleich 38 % größer als der Zwischenradius (R2) ist und der Zwischenradius (R2) wiederum um einen Anteilsbereich zwischen 60 und 72 % einschließlich, vorzugsweise zwischen 63 und 69 % einschließlich, besonders bevorzugt zwischen 65 und 67 % einschließlich und ganz besonders bevorzugt im Wesentlichen gleich 66 % größer als der kleinere Radius (R1) ist.

## Revendications

1. Composant (1) de rayonnages, d'étagères, de bibliothèques, d'escaliers et d'éléments d'ameublement similaires comprenant :
au moins deux éléments laminaires (2', 2") sensiblement parallèles l'un à l'autre et définissant un plan (P) d'extension du composant (1) ;
lesdits au moins deux éléments laminaires (2', 2") recouvrant une couche intermédiaire (3), interposée entre eux, sensiblement coplanaire audit plan (P) ;
ladite couche intermédiaire (3) comportant un châssis constitué de traverses métalliques (3', 3") conçues pour être reliées les unes aux autres par des moyens d'encliquetage (32, 33), pour supporter au moins un élément allongé (4), réalisé en matériau métallique, s'étendant le long d'une direction longitudinale (X) dans ledit plan (P) ;
ledit élément allongé (4) comprenant et étant configuré pour loger des moyens d'éclairage à induction (6) et positionné à l'intérieur du périmètre défini par ledit châssis ;
lesdites traverses métalliques (3', 3") comportant des conduits (31) pour le passage de câbles (7) pour électrifier lesdits moyens d'éclairage (6).

2. Composant (1) selon la revendication 1, comprenant une plaque de renforcement (5) positionnée à l'intérieur du périmètre défini par ledit châssis, adjacente audit au moins un élément allongé (4) et comportant une structure consistant en une tessellation de l'espace d'un type en nid d'abeille, de préférence en forme de nid d'abeille.

3. Composant (1) selon la revendication 1 ou 2, dans lequel ledit au moins un élément allongé (4) comprend une rainure interne (41) pour lesdits moyens d'éclairage (6) ;
ladite rainure interne (41) comportant un profil curviligne sensiblement elliptique (41a) formé de telle sorte que la source de lumière des moyens d'éclairage (6) soit cachée du contact direct avec l'œil de l'utilisateur.

4. Composant (1) selon la revendication 3, dans lequel ledit profil curviligne (41a) consiste en la succession d'au moins trois arcs de cercle (C1, C2, C3) de rayon différent (R1, R2, R3), de manière à ce que le rapport entre les rayons (R1, R3) de la circonférence la plus petite (C1) et la plus grande (C3) et le rapport entre la largeur (h) de ladite rainure interne (41) et la longueur (L) de l'ouverture d'accès (41b) de ladite rainure interne (41), sont mutuellement dans une proportion comprise entre 1,30 et 2,00, inclusivement, de préférence entre 1,40 et 1,90, inclusivement, plus préférablement entre 1,50 et 1,80, inclusivement, encore plus préférablement entre 1,60 et 1,70, inclusivement.

5. Composant (1) selon l'une quelconque des revendications 1 à 4, dans lequel lesdites traverses métalliques (3', 3"), constituant le châssis, comprennent au moins une paire de tiges verticales (3') et une paire de tiges horizontales (3") qui sont mutuellement normales.

6. Composant (1) selon la revendication 5, dans lequel les moyens d'encliquetage (32, 33) comprennent au moins un élément mâle (32) faisant saillie à partir d'au moins l'une desdites tiges verticales (3') et conçu pour s'engager avec un élément femelle (33) défini au niveau de l'une respective desdites tiges horizontales (3").

7. Composant (1) selon l'une quelconque des revendications 3 à 6, dans lequel lesdits conduits (31) sont définis le long de la direction d'extension desdites traverses métalliques (3', 3") et ont, au niveau dudit au moins un élément allongé (4), une ouverture (34', 34") pour communiquer avec ladite rainure interne (41).

8. Procédé de fabrication d'un composant (1) de rayonnages, d'étagères, de bibliothèques, d'escaliers et d'éléments d'ameublement similaires comprenant les étapes de :
- extruder des traverses métalliques (3', 3") comportant des moyens d'encliquetage (32, 33) pour leur liaison réciproque et au moins un élément allongé (4) en matériau métallique ;
- fraiser ledit au moins un élément allongé (4) le long d'une direction longitudinale (X) d'extension dudit au moins un élément allongé (4), de manière à former une rainure interne (41) conçue pour loger des moyens d'éclairage à induction (6) et de sorte que ladite rainure interne (41) ait un profil curviligne sensiblement elliptique (41a) formé de manière à cacher la source lumineuse desdits moyens d'éclairage (6) du contact direct avec l'œil de l'utilisateur ;
- réaliser des conduits (31) pour le passage de câbles (7) pour électrifier lesdits moyens d'éclairage (6) sur lesdites traverses métalliques (3', 3"), de manière à permettre la communication mutuelle entre chacune desdites rainures internes (41) avec lesdits conduits (41) correspondants ;
- connecter lesdites traverses métalliques (3', 3") à l'aide desdits moyens d'encliquetage (31, 32) pour former un châssis définissant un périmètre ;
- positionner, à l'intérieur dudit périmètre, au moins un élément allongé (4) et une plaque de renforcement (5), l'un à côté de l'autre de manière à former une couche intermédiaire (3) définissant un plan (P) d'extension du composant (1) ;
ledit au moins un élément allongé (4) logeant lesdits moyens d'éclairage (6) dans ladite rainure interne (41) et ladite plaque de renforcement (5) ayant une structure constituée d'une tessellation de l'espace de type nid d'abeille, de préférence en forme de nid d'abeille ; ladite couche intermédiaire (3) s'interposant entre au moins deux éléments laminaires (2', 2") sensiblement parallèles l'un à l'autre ;
- faire passer lesdits câbles (7) dans lesdits conduits (31) de manière à pouvoir les raccorder auxdits moyens d'éclairage (6) ;
- réaliser, par enlèvement de matière, une fenêtre (21) sur un premier élément (2') desdits au moins deux éléments laminaires (2', 2") ;
ladite fenêtre (21) étant définie au niveau de ladite rainure interne (41), de telle sorte que la lumière émise par lesdits moyens d'éclairage (6) ne soit pas arrêtée par l'épaisseur dudit premier élément (2') ; et
- coller lesdits éléments laminaires (2', 2") sur les faces opposées de ladite couche intermédiaire (3) de manière à réaliser le composant (1).

9. Procédé selon la revendication 8, dans lequel l'étape consistant à fraiser ledit au moins un élément allongé (4) comprend réaliser ladite rainure interne (41) de telle sorte qu'elle présente un profil incurvé (41a) réalisé en plaçant successivement au moins trois arcs de cercle (C1, C2, C3) de rayons différents (R1, R2, R3), un rayon plus grand (R1), un rayon intermédiaire (R2) et un rayon plus petit (R3), et en séquence croissante les uns avec les autres le long de la ligne de fraisage.

10. Procédé selon la revendication 9, dans lequel ledit rayon plus grand (R1) est supérieur audit rayon intermédiaire (R2) d'une plage de pourcentage comprise entre 33 % et 43 %, inclusivement, de préférence entre 35 et 41 %, inclusivement, plus préférablement entre 37 et 39 %, inclusivement, encore plus préférablement sensiblement égal à 38 % et ledit rayon intermédiaire (R2) est, à son tour, supérieur audit rayon plus petit (R1) d'une plage de pourcentage comprise entre 60 et 72 %, inclusivement, de préférence entre 63 et 69 %, inclusivement, plus préférablement entre 65 et 67 %, inclusivement, encore plus préférablement sensiblement égal à 66 %.
